# EUROPÄISCHE PATENTANMELDUNG

(11) **EP 4 613 354 A1**
(43) Veröffentlichungstag der Anmeldung: **10.09.2025**
(21) Anmeldenummer: 25161826.0
(22) Anmeldetag: 05.03.2025
(51) Int. Cl.: B01D 46/00, B05B 14/43

(54) **FILTEREINHEIT, ABSCHEIDEVORRICHTUNG UND VERFAHREN ZUM AUSTAUSCH EINER FILTEREINHEIT IN DER ABSCHEIDEVORRICHTUNG**

(30) Priorität: 05.03.2024 DE 102024106334
(71) Anmelder: Innovative Paint & Conveyor Systems S.L.,, 08550 Gavá, Barcelona (ES)
(72) Erfinder: KNAUS, Uwe, 75228 Ispringen (DE); WAGNER, Andreas, 71093 Weil im Schönbuch (DE)
(74) Vertreter: Kleine, Hubertus

(57) **Zusammenfassung**

Eine Filtereinheit (14, 16, 100) einer Abscheidevorrichtung (10) zum Abscheiden von flüssigen oder festen Partikeln aus einem mit Overspray beladenen Luftstrom einer Beschichtungsanlage (1), wobei die Filtereinheit (14, 16, 100) zumindest ein Filtermodul (24-26) aufweist, welches als Einweg-Filtermodul ausgebildet ist und wobei die wobei das Filtereinheit (14, 16, 100) an einer Gehäuseaußenwand (38) eine Einströmöffnung (37) aufweist, wobei die Filtereinheit (14, 16, 100) an der Außenseite der Gehäuseaußenwand (38) einen Dichtring (39) aufweist, der um die Einströmöffnung (37) herum angeordnet ist; sowie eine Abscheidevorrichtung und ein Verfahren zum Austausch von Filterelementen.

## Beschreibung

Die vorliegende Erfindung betrifft eine Filtereinheit nach dem Oberbegriff des Anspruchs 1, sowie eine Abscheidevorrichtung und ein Verfahren zum Austausch der Filtereinheit in der Abscheidevorrichtung.

Die Abscheidevorrichtung wird zur Abscheidung von sogenannten Overspray-Nebeln eingesetzt, welche beim Lackieren von Karosserien auftreten können. Diese Nebel können Pulver- oder Nasslack-Partikel im Luftstrom mit unterschiedlicher Klebrigkeit umfassen. Es können Farblackpartikel, Primer oder alle andere Arten von Beschichtungen für Fahrzeug-Karosserien sein.

Die DE 10 2013 001 982 A1 offenbart ein Filtersystem, in welchem ein austauschbares Filtermodul einen Einlasskragen aufweist. Die Abscheidevorrichtung selbst weist einen nicht-austauschbaren Anschlussstutzen auf zur Kopplung mit dem austauschbaren Filtermodul. Dabei taucht der nicht-austauschbare Anschlussstutzen in den Einlasskragen des austauschbaren Filtermoduls ein, so dass der Anschlussstutzen von dem Einlasskragen umgeben ist. Das austauschbare Filtermodul kann dabei aus einem single-use Material, insbesondere Pappe gebildet sein, während der Anschlussstutzen üblicherweise aus beständigem Material, wie z.B. Stahlblech gebildet ist.

Dabei kann es allerdings aufgrund der parallel zur Längsachse des Anschlussstutzens verlaufenden Überlappungsbereiche dieses Einsteckkonzepts zu einem Anbacken der Pappwände an dem Anschlussstutzens kommen, sofern z.B. klebrige Lackzusammensetzungen von Nasslacken oder Primern eingesetzt werden. In diesem Fall lässt sich die Verbindung gar nicht oder nur unter erheblichen mechanischen Einsatz z.B. von Hämmern oder chemischen Lösemitteln oder dergleichen lösen.

Überdies ist es von Vorteil, wenn die Trennung zwischen dem Filtermodul und dem Anschlussstutzen sauber erfolgt, indem der Anschlussstutzen verschlossen wird, so dass beim Austausch kein Material unkontrolliert nachrieselt. Ein entsprechendes Verschlusssystem kann aufgrund des Einsteckkonzepts nur in den Anschlussstutzen oberhalb der Steckebene integriert werden. Hier ist die Anschmutzung allerdings während der Lackabscheidung besonders hoch, was zu einer Störung des Verschlusssystems führen kann.

Die EP 2 736 656 basiert bezogen auf die DE 10 2013 001 982 A1 ebenfalls auf einem Steckkonzept mit dem Unterschied, dass austauschbares Filtermodul in diesem Fall in einen Kanalauslassstutzen aufgesteckt und nicht über diesen übergestülpt wird. Daher ist es unumgänglich, dass das Filtergehäuse des austauschbaren Filtermoduls einen zum Kanalauslassstutzen komplementären Filtereinlass aufweisen muss, so dass der Filtereinlass passend und damit dichtend auf den Kanalauslassstutzen gesteckt werden kann.

Auch bei diesem Einsteckkonzept werden entlang der Längsachse des Kanalauslassstutzens zwingend Überlappungsbereiche mit der Wandung des Stutzens zur Gewährleistung der Dichtigkeit gebildet, welche im Betrieb durch den Lacknebel anbacken können, so dass sich die Steckverbindung nicht ohne weiteres lösen lasst. Auch hier lässt sich überdies - wie bei allen Stecklösungen - ein Verschließen des Kanalauslassstutzens während des Filtermodulwechsels nur über eine Verschlussvorrichtung im Kanalauslassstutzen, also einem mit Lack stark belasteten Bereich, realisieren.

Ein Mischkonzept aus Steck- und Anschlagsdichtung ist in der US 3,719,030 offenbart. Hier erfolgt eine Kopplung eines austauschbaren Filtermoduls mit einem fest installierten Luftleitkanal über einen längenvariablen Faltenbalgkragen. Aufgrund der Längenvariabilität kann ein U-Profil der Einlassöffnung bis auf den Anschlag einer Flachdichtung des Filtermoduls abgesenkt werden. Allerdings können die Falten des Faltenbalgkragens über die Dauer des Betriebs mit Lackpartikeln zugesetzt werden, so dass die Falten erstarren und/oder verkleben und die Längenvariabilität und damit die Anbindung nicht mehr störungsfrei möglich ist. Auch bei der Steck-Variante des U-Profils ist ein Verschluss der Öffnung des Luftleitkanals während des Austauschs des Filtermoduls nicht unkompliziert möglich. Gleiches gilt im Übrigen auch für die Kopplungsvariante der EP 1 342 07 A1.

Die vorgenannten Dokumente des Standes der Technik sind somit Steckvarianten mit komplementären Kopplungselementen zur Herstellung einer dichtenden Verbindung zwischen den austauschbaren Filtermodul und einem fest-installierten Luftleitkanal, bei welchen der Filteraustausch bei zunehmender Betriebsdauer und Verschmutzung des Luftleitkanals erschwert sein kann.

Die DE 10 2015 008 844 A1 offenbart in Fig. 5B in Kombination mit Abs. 0072 eine Labyrinthdichtung ggf. auch alternativ oder in Kombination mit einer Hohlkammerdichtung oder mit einer flexiblen Dichtung. Dabei wird die Filtereinheit bzw. das Filtermodul stets mit einer aufgestellten in Richtung des Anschlusskanals geführt.

Sowohl die Labyrinthdichtung als auch die anderen Dichtungsvarianten verkleben oder versotten an der Schnittstelle durch den Lacknebel. Ein Auftrennen der Dichtung zum Lösen des Filtermoduls, z.B. durch Einschieben eines Trennblechs, scheitert im Fall der Labyrinthdichtung durch die die Labyrinthdichtung bildenden Blechabschnitte. Überdies bildet das Labyrinth eine Sammelstelle für Lack, welcher aushärtet. Die anderen Dichtungsalternativen verbleiben am Leitstruktur-Anschlussbereich. Bei klebendem Lacknebel muss der Anschlussbereich bei jedem Filterwechsel gereinigt und mit neuer Dichtung versehen werden.

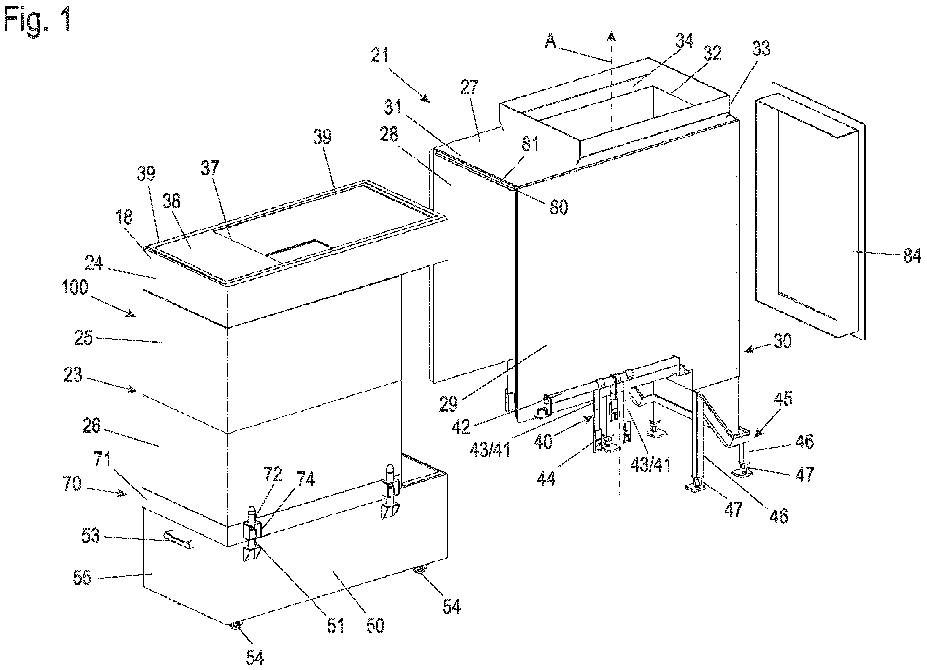

Die US 2 023 321 682 A1 offenbart sodann Lösung, in welcher eine Filtereinheit durch Anheben an einen Anschlussstutzen angebunden wird. Fig. 1b und Fig. 27a und b zeigen aufgestellte Kantenflächen um die Zuführöffnung der Filtermodule und der Filtereinheit, so dass auch hier eine Einstecklösung naheliegend ist. Eine Dichtung auf der Kante wäre nur sehr dünn ausgebildet. Eine Dichtung kann daher nur sinnvoll seitlich der stirnseitigen Kantenfläche angeordnet werden. Hohlkammerdichtungen zum Auftrennen weisen bei Einstecklösungen keinen besonderen Vorteil auf..

Ausgehend von dieser Vorbetrachtung ist es die Aufgabe der vorliegenden Erfindung ein Konzept zum einfacheren Austausch einer Filtereinheit mit einem oder mehreren Einweg-Filtermodulen zu ermöglichen, welches beim Austausch zugleich einen unkomplizierten und störungsfreien Verschluss des stark-verschmutzten Luftleitkanals erlaubt.

Die vorliegende Erfindung löst diese Aufgabe durch das Bereitstellen einer Filtereinheit und einer Abscheidevorrichtung mit den Merkmalen des Anspruchs 1.

Erfindungsgemäß ist eine Abscheidevorrichtung umfassend einen Filteradapter zum Anschluss an ein Leitstruktur, z.B. einen Ableitungskanal von Overspray. Der Filteradapter dient zur dauerhaften Festlegung an einen Stutzen einer Leitstruktur zur Ableitung von Overspray aus einer Lackierkabine einer Beschichtungsanlage.

Der Filteradapter weist einen Leitstruktur-Anschlussbereich zum Anschluss an den Stutzen und einen Einschubkorpus zur Aufnahme einer Filtereinheit, vorzugsweise zumindest einer erfindungsgemäßen Filtereinheit auf. Eine Leitstruktur im Sinne der vorliegenden Erfindung kann beispielsweise ein Kanalsystem aus einem oder mehreren Leitungskanälen sein, welche Overspray aus einer Lackierkabine ableiten.

Der Leitstruktur-Anschlussbereich ist vom Einschubkorpus durch eine Deckenwand getrennt. Die Deckenwand weist eine Durchtrittsöffnung zur Überleitung von Overspray aus dem Leitstruktur-Anschlussbereich in den Bereich des Einschubkorpus auf.

Das Filtereinheit und vorzugsweise das Filtermodul weist auf einer zur Deckenwand gerichteten Gehäusewandung einen Dichtring auf. Der Dichtring ist derart dimensioniert, dass der Dichtringumfang größer ist als der Umfang der Durchtrittsöffnung. Der Dichtringumfang bezieht sich auf den Außenumfang des Dichtrings.

Die Vorteile sind analog zum Filtereinheit selbst eine größere Variabilität bei der Dimensionierung der Filtereinheit und des Filtermoduls und dessen Einzelteile und die Schaffung einer Trennebene, welche weder durch die austauschbare Filtereinheit noch durch den Leitstruktur-Anschlussbereich verläuft. Dadurch können einfache Konzepte zum Verschluss des Leitstruktur-Anschlussbereichs und zum Austausch der Filtereinheit ermöglicht werden.

Vorteilhafte Ausgestaltungen der Erfindung sind Gegenstand der Unteransprüche.

Es ist von Vorteil, wenn der Einschubkorpus mit dem Filtermodul und/oder der Filtereinheit über eine Spannvorrichtung verspannt ist, derart, dass die Filtereinheit gegen die Deckenwand gepresst ist. Diese Halterung ist zuverlässig und die Dichtigkeit kann über einen Spanndruck manuell eingestellt und selbst im laufenden Abscheideprozess nachgestellt werden.

Weiterhin kann die Filtereinheit mehrere Einweg-Filtermodule umfassen. Diese können als Modulanordnung ausgebildet sein aus mehreren übereinander gestapelten Filtermodulen. Dadurch wird eine Variabilität in der Filterperformance erreicht und somit kann die Filtration durch die Filtereinheit auf die Overspray-Zusammensetzung abgestimmt werden. Ein Element der Filtereinheit, insbesondere der Modulanordnung, weist zur Festlegung Spannelemente als Teil der Spannvorrichtung auf. Das Element kann ein Filtermodul sein oder ein separates Element zur Festlegung der Filtereinheit, z.B. ein Zwischenboden. Sämtliche Filtermodule der Modulanordnung der Filtereinheit können als Einweg-Filtermodule ausgebildet sein. Besonders bevorzugt können alle Einweg-Filtermodule der Modulanordnung aus den gleichen Einweg-Materialien ausgebildet sein.

Das separate Element zur Festlegung der Filtereinheit kann ebenfalls als Einwegelement ausgebildet sein. Alternativ kann dieses Element auch als Mehrweg-Element ausgebildet sein. Im Fall des Zwischenbodens kann die Modulanordnung auf den Zwischenboden aufgesetzt und verspannt werden.

Die Spannvorrichtung kann am Einschubkorpus des Filteradapters, insbesondere an zwei parallele zueinander angeordneten Seitenwänden, festgelegt sein. Dies ermöglicht eine besonders stabile Sicherung und Verspannung des austauschbaren Filtermoduls, der austauschbaren Modulanordnung und/oder der austauschbaren Filtereinheit insgesamt.

Die Filtereinheit kann einen rollengelagerten Filterrollkasten aufweisen, in welchem vorzugsweise ein austauschbares Wechselfiltermedium angeordnet ist. Während das vorgenannte Filtermodul oder die vorgenannte Modulanordnung vorzugsweise als Trägheitsfilter zur Grobfilterung ausgebildet sind, weist der Filterrollkasten ein Wechselfiltermedium auf, durch welches der Overspray-Gasstrom durchgeleitet wird und in welchem sich Partikel abscheiden. Dies ist eine Feinfiltration i.S. der vorliegenden Anmeldung. Bevorzugt ist der Filterrollkasten einzeln gegenüber dem Filtermodul oder der Modulanordnung entnehmbar. Dieses Prinzip nutzt aus, dass die Lebenszeit der unterschiedlichen Filterstufen verschieden sein können. So kann z.B. das Wechselfiltermedium häufiger ausgetauscht werden als die vorgeschalteten Filtermodule zur Grobfiltration.

Die Filtereinheit kann, wie zuvor beschrieben, eine Modulanordnung mit mehreren, insbesondere übereinander angeordneten, Filtermodulen aufweisen, wobei der Filterrollkasten und die Modulanordnung getrennt voneinander verspannt an dem Filteradapter, insbesondere an dem Einschubkorpus, festgelegt, insbesondere verspannt, ist. Dies erlaubt eine gesonderte Entnahme beider Elemente der Filtereinheit.

Bevorzugt kann die Filtereinheit einen Zwischenboden zwischen der Modulanordnung und dem Filterrollkasten aufweisen, wobei der Zwischenboden Spannelemente als Teil der Spannvorrichtung aufweist. Dies ermöglicht eine breitflächige Übertragung von Spannkräften auf die jeweiligen weiteren Teile der Filtereinheit, respektive der Modulanordnung und dem Filterrollkasten.

Weiterhin erfindungsgemäß ist ein Verfahren zum Austausch von Filtereinheiten in einer erfindungsgemäßen Abscheidevorrichtung einer Beschichtungsanlage:
In einem ersten Schritt erfolgt eine Entnahme zumindest eines verbrauchten Teilelements einer verbrauchten Filtereinheit oder der gesamten gebrauchten Filtereinheit aus dem Einschubkorpus des Filteradapters.

In einem zweiten Schritt erfolgt ein Einschub einer unverbrauchten Filtereinheit und/oder eines Teilelements der Filtereinheit zwischen die Seitenwände des Einschubkorpus.

Bevorzugt weist die Einschubrichtung einen radialen Vektor mit Bezug auf die Längsachse des Einschubkorpus auf. Dies bedeutet, dass der Filter nicht nur linear aufgesteckt, sondern seitlich in den Einschubkorpus eingeführt wird. Dies Bewegung zum Einführen ist beispielsweise bei einem umfangsseitig geschlossenen Stutzen nicht möglich, sondern nur in einer seitlich offenen Führungsstruktur, wie sie durch den Einschubkorpus bereitgestellt wird. Zugleich ist das System flexibler als bei einem Stutzen und bietet einerseits eine Führung und andererseits mehr Bewegungsspiel beim Einsetzen des Filtermoduls und auch bei dessen Entnahme nach dem bestimmungsgemäßen Gebrauch.

In einem dritten Schritt erfolgt ein Verbinden von Spannelementen der Filtereinheit und des Filteradapters zu einer Spannvorrichtung. Als Spannelemente können vorteilhaft Spanngurte genutzt werden. Die Spanngurte können jeweils ein Los- und ein Festende aufweisen.

Die Losenden der Spanngurte können in einer Ratsche, einem Klemmschloss und/oder einer Spannklemme verspannt werden. Entsprechende Techniken sind aus dem Bereich der Transportsicherung z.B. von LKW-Landungen an sich bekannt.

Beispielsweise kann eine Spannvorrichtung im Sinne der vorliegenden aus zwei Spanngurten und einer Ratsche gebildet sein. Auch mehrere dieser Elemente können in einer Spannvorrichtung realisiert sein. Es ist auch möglich, dass die Filtereinheit keine Spannelemente der Spannvorrichtung aufweist, sondern beide Gurte über eine Ratsche oder eine andere Vorrichtung verbunden sind und als eine oder mehrere Schlaufen herabhängen, in welche die Filtereinheit einsetzbar ist, so dass die Schlaufe oder die Schlaufen unter dem Boden der Filtereinheit durchgeführt ist oder sind. Durch Anziehen der Schlaufe erfolgt sodann das Verspannen der Filtereinheit gegen die Deckenwand.

Das Festende kann mit einem Endbeschlag, z.B. einem Haken, einem Karabiner, einem Bügel und/oder einer Öse versehen sein. Der Endbeschlag kann unmittelbar an dem Filtermodul, am Zwischenboden, am Einschubkorpus oder an einer daran befestigten Öse oder einem anderen Kopplungsmittel festgelegt sein.

In einem vierten Schritt erfolgt sodann das Verspannen der Spannvorrichtung unter Anheben der Filtereinheit und/oder des Teilelements bis zu einem Anschlag. Erst in diesem Schritt erfolgt ein letztes finales Anheben der Filereinheit in linearer Richtung, insbesondere nach oben gegen die Deckenwand.

Der Vorteil des erfindungsgemäßen Verfahrens ist die zusätzliche Führung durch die Seitenwände des Einschubkorpus, so dass eine Vorpositionierung bzw. Zentrierung der Filtereinheit vor dem Anpressen erfolgt.

Vorteilhaft kann in Schritt A ein Verschluss einer Durchtrittsöffnung in einer Deckenwand des Einschubkorpus durch Einführen eines Verschlusselements, insbesondere eines plattenförmigen Verschlusselements, vorzugsweise eines Trennblechs, entlang einer Trennebene zwischen der austauschbaren Filtereinheit und dem fest-installierten Filteradapter erfolgen. Dieser Verschluss wurde im Stand der Technik meist komplizierter gelöst. Bekannte Verschlussmechanismen sind meist komplizierter ausgestaltet und umfassen mehr bewegte Teile, welche bei großer Partikelbelastung verkleben können. Die Erfindung schafft hier eine einfache und zugleich störungsunanfällige Lösung für den Verschluss der Durchtrittsöffnung, so dass bei entnommener Filtereinheit kein Overspray aus der Leitstruktur der Beschichtungsanlage herausrieselt. Da das Austauschzeitintervall im Vergleich zum Abscheidebetrieb relativ kurz ist, kann das plattenförmige Verschlusselement für den Austausch von Filtereinheiten von mehreren nebeneinander angeordneten Abscheidungsvorrichtungen genutzt werden.

Als Verschlusselement kann alternativ zum Trennblech auch ein Element aus einem anderen Material, wie Karton, Kunststoff und/oder Holz zur Anordnung entlang der Trennebene eingesetzt werden. Die Trennebene kann auch mit einer Einlage aus Metall und/oder Karton realisiert werden.

Eine erfindungsgemäße austauschbare Filtereinheit einer Abscheidevorrichtung dient zum Abscheiden von flüssigen oder festen Partikeln aus einem mit Overspray beladenen Luftstrom einer Beschichtungsanlage.

Die Filtereinheit weist zumindest ein Filtermodul auf. Das Filtermodul kann zumindest ein Gehäuse und darin angeordnete Filterelemente umfassen.

Die Filterelemente können als Trägheitsabscheider ausgebildet sein, an welchen eine oberflächliche Partikelabscheidung stattfindet. Die Ausgestaltung als Trägheitsabscheider kann insbesondere in Filtermodulen zur Grobabscheidung eingesetzt werden.

Alternativ oder zusätzlich weisen können die Filterelemente auch ein Filtermedium aufweisen, welches durch den Luftstrom durchströmt wird, so dass Partikel innerhalb Filtermedium abgeschieden werden und dort gesammelt werden. Beide Varianten von Filterelementen sind an sich bekannt.

Nachfolgend entspricht eine Grobabscheidung einem Trägheitsabscheider und eine Feinabscheidung entspricht einer Filtration durch ein Filtermedium.

Die Filtereinheit weist an einer Gehäuseaußenwand eine Einströmöffnung auf. Die Gehäuseaußenwand kann dem Gehäuse des Filtermoduls zugeordnet sein oder ein Einwegaufsatz auf dem Filtermodul sein. Das Filtermodul ist als Einweg-Filtermodul ausgebildet. Es kann nach einmaligem Gebrauch nicht durch Pyrolyse oder anderen Aufarbeitungsvarianten nicht erneut bestimmungsgemäß eingesetzt werden.

Es ist möglich und bevorzugt, dass sowohl das Gehäuse als auch die Filterelemente des Filtermoduls und ggf. auch des Filteraufsatzes aus einem brennbaren Material, insbesondere aus Pappe bzw. Karton gefertigt sind. Auch andere Einweg-Materialien wie Kunststoff sind denkbar.

Alternativ und vorteilhaft sind zumindest die Filterelemente sind aus Pappe und/oder Kunststoff also aus Einweg-Material gefertigt.

Das Filtermodul und ggf. auch die Filtereinheit kann nach dem Gebrauch vollständig entsorgt, z.B. einer Verbrennungsanlage, zugeführt werden.

Erfindungsgemäß weist die Filtereinheit entlang der Außenseite der Gehäuseaußenwand einen Dichtring auf, der um die Einströmöffnung herum angeordnet ist. Diese Gehäuseaußenwand kann dem Gehäuse des Filtermoduls zugeordnet sein. Die Gehäuseaußenwand kann allerdings auch einem auf dem eigentlichen Filtermodul aufgesetzter Filteraufsatz, z.B. nur mit einem Gehäuse und ohne zusätzliche Filterelemente, zugeordnet sein.

In der einfachsten Ausführung kann die erfindungsgemäße Filtereinheit auch nur aus einem einzigen Einweg-Filtermodul bestehen, an dessen Gehäuseaußenwand der Dichtring angeordnet ist.

Durch die Dichtung kann die Filtereinheit an einen Filteradapter auf Anschlag herangefahren werden, ohne dass eine Steckverbindung zwischen den beiden Bauteilen hergestellt werden muss.

Der Vorteil ist einerseits die Varianz in den Abmessungen des Filtermoduls und der Filtereinheit, des Dichtrings und der Einströmöffnung. Während bei einer Steckverbindung beide Steckpartner aufeinander abgestimmt sein müssen, können die Dimensionen bei der erfindungsgemäßen Lösung variieren.

Weiterhin erfolgt durch die erfindungsgemäße Filtereinheit die Schaffung einer Dichtebene bzw. Trennebene, welche außerhalb des Filteradapters und außerhalb des Filtermoduls bzw. der Filtereinheit liegt. Diese Trennebene ermöglicht einen unkomplizierten Verschluss des Filteradapters vor der Auswechslung der Filtereinheit.

Insgesamt ist die erfindungsgemäße Lösung im Vergleich zu bestehenden Systemen somit einfach in der Handhabung und beim Austausch.

Erfindungsgemäß ist der Dichtring als eine Hohlkammerdichtung mit einer Hohlkammer innerhalb Profilquerschnitts durch die Längsachse des Dichtrings angeordnet ist. Da die Filtereinheit auf Anschlag gefahren und verspannt ist, ermöglicht die Hohlkammer eine bessere Verformung und damit eine breitere Dichtfläche.

Weiterhin ermöglicht die Hohlkammer ein einfacheres Auftrennen der Dichtung zum Lösen und Austausch der Filtereinheit.

Vorteilhafte Ausgestaltungen der Erfindung sind Gegenstand der Unteransprüche.

Bevorzugt liegt der Dichtring an der Gehäuseaußenwandung des Gehäuses des Filtermoduls an. Damit ist die Filtereinheit platzsparend ausgebildet und gibt dem Dichtring eine besondere Stabilität und Flexibilität bei dessen flächigen Anschlag an dem Filteradapter. Die Filteradapter sorgen dabei für eine zusätzliche Stabilität des Gehäuses des Filtermoduls bei dessen Anschlag und Verspannung.

Es ist überdies von Vorteil, wenn der Dichtring im Profilquerschnitt durch die Längsachse des Dichtrings im unbelasteten Zustand eine größere Erstreckung in einer Richtung parallel zur Gehäuseaußenwand aufweist als senkrecht zur Gehäuseaußenwand. Die größere Erstreckung kann bevorzugt mehr als 50% aufweisen. Dadurch wird eine größere Dichtfläche geschaffen.

Es ist weiterhin von Vorteil, wenn der Dichtring aus einem Elastomer und/oder einem TPE gebildet ist. Dadurch kann ein besseres Ablösen des Filtermoduls und/oder der Filtereinheit zum Zwecke des Austauschs auch bei umfangreichen Ablagerungen von Partikeln entlang der Trennebene erreicht werden.

Das Filtermodul kann insbesondere zu mehr als 90 Gew.% aus einem zellulosehaltigen Material gebildet sein. Weniger als 10% können für eine Folienschicht und/oder Fixierungselemente vorgesehen sein. Zellulosehaltige Materialien können sehr umfangreich im Rahmen einer Verbrennung entsorgt werden.

Besonders bevorzugt kann das gesamte Filtermodul oder sogar die gesamte Filtereinheit, abgesehen vom Dichtring, aus Pappe bzw. Karton bestehen, so dass eine vollständige Entsorgung durch Verbrennung problemlos möglich ist.

Weitere Vorteile, Merkmale und Einzelheiten der Erfindung ergeben sich aus der nachfolgenden Beschreibung, in der ein Ausführungsbeispiel der Erfindung anhand der beiliegenden Zeichnungen näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Insbesondere gibt es eine Vielzahl von Möglichkeiten, das erfindungsgemäße Filtermodul im Rahmen der vorliegenden Erfindung abzuwandeln und weiterzubilden. Es zeigen:
- Fig. 1: Perspektivansicht der Einzelteile einer an einem Filteradapter der Abscheidevorrichtung gekoppelten Modulanordnung;
- Fig. 2: Perspektivansicht des Filterbereichs der Abscheidevorrichtung der Fig. 1;
- Fig. 3: Vorderer Schnittansicht der Trennebene zwischen dem Filteradapter und der Modulanordnung;
- Fig. 4: geschnittener Perspektivansicht der Trennebene zwischen dem Filteradapter und der Modulanordnung;
- Fig. 5: Perspektivansicht der Fig. 2 mit einem Kanalverschlussblech;
- Fig. 6: Perspektivansicht der Fig. 2 mit eingeführtem Kanalverschlussblech in einer Trennebene;

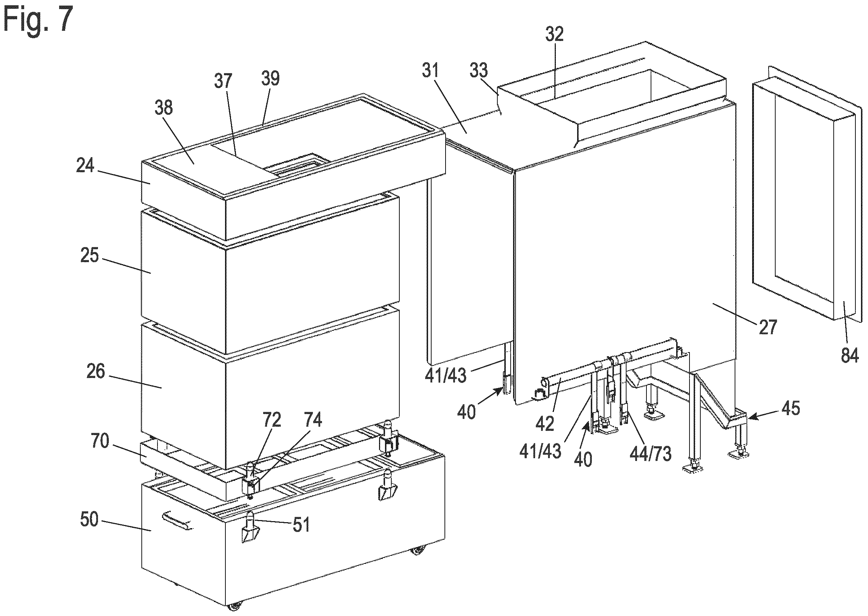

- Fig. 7: Perspektivansicht der Fig. 1 mit demontierter Modulanordnung;

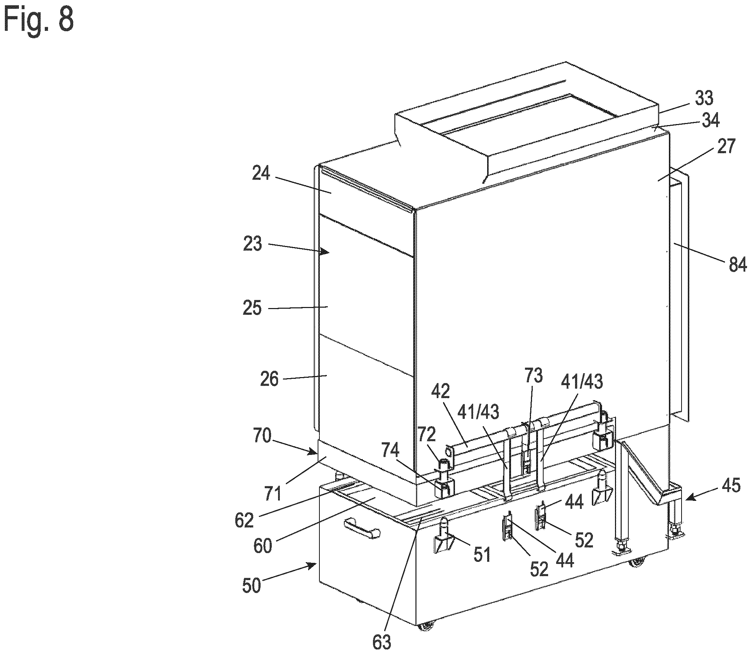

- Fig. 8: Perspektivansicht der Fig. 1 mit an den Filteradapter angeschlossener Filtermodulstapel der Modulanordnung und einem Filterrollgrundkasten mit einem Wechselfiltermedium;
- Fig. 9: Detailansicht der Fig. 1 im Bereich der Koppelebene zwischen dem Filteradapter und der Modulanordnung;
- Fig. 10: Perspektivansicht der Fig. 1 mit demontierten Filterrollgrundkasten mit entnommenen Wechselfiltermedium; und
- Fig. 11: schematische Darstellung einer Beschichtungsanlage für den Einsatz der erfindungsgemäßen Filtereinheit

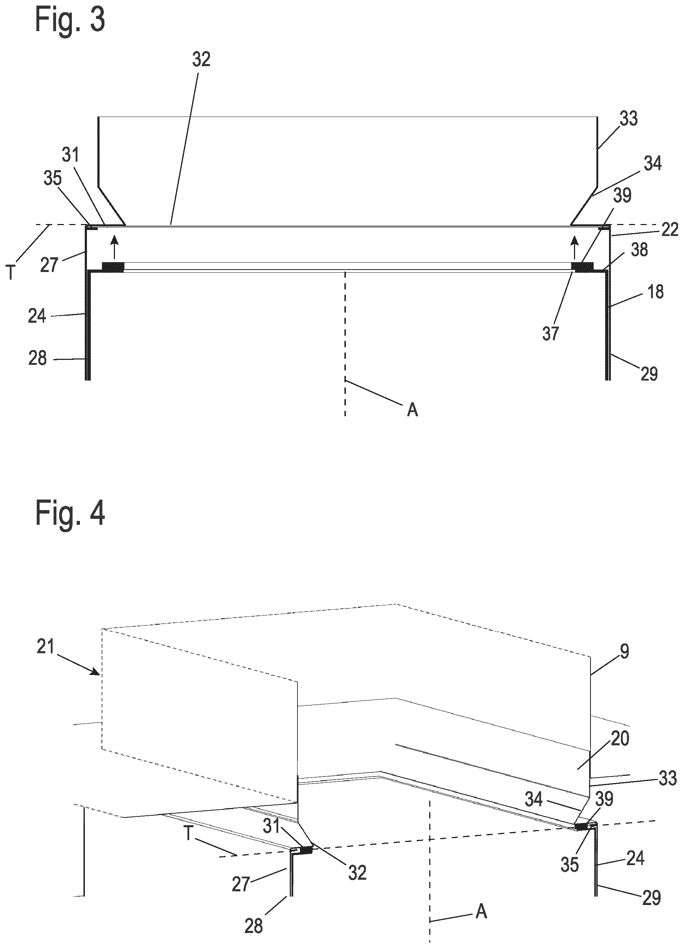

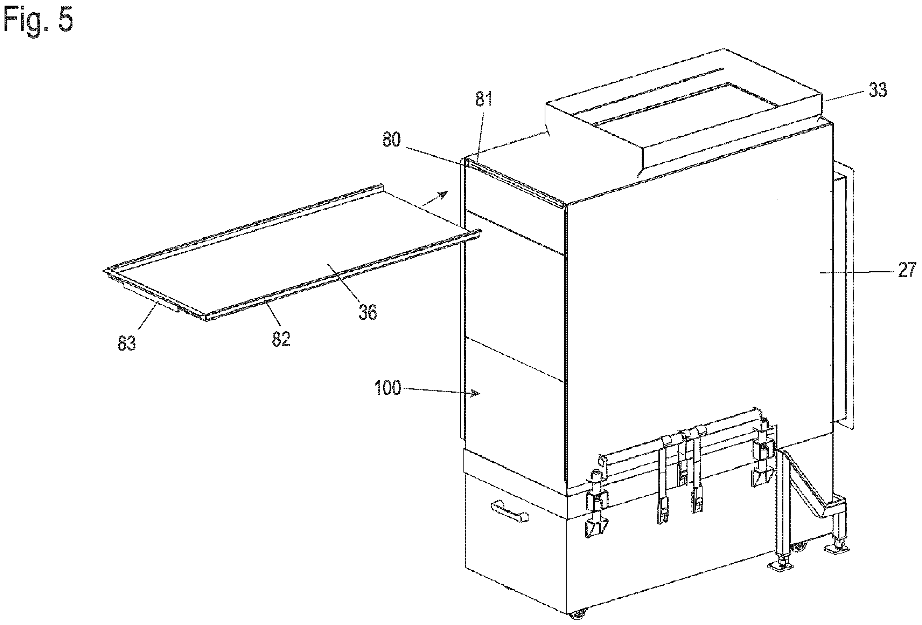

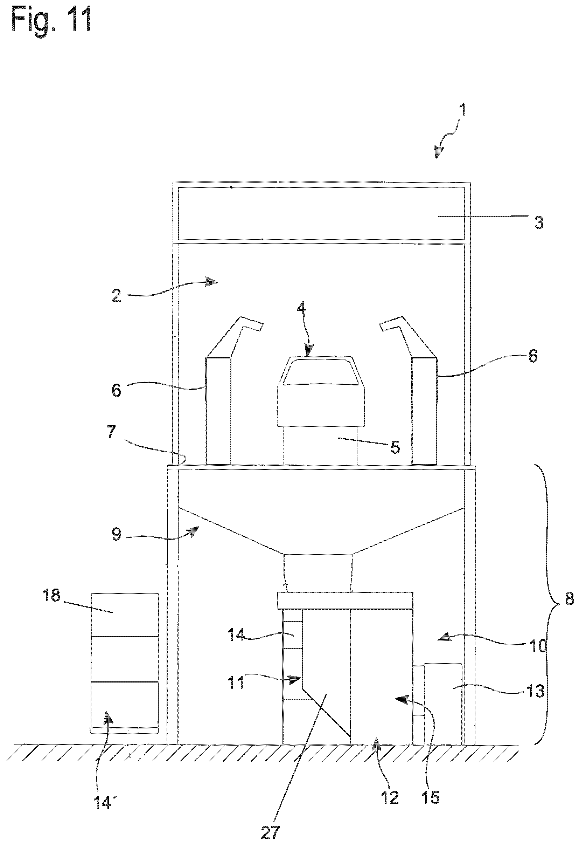

Fig. 11 zeigt eine Beschichtungsanlage 1 mit einem Beschichtungstunnel 2 zum Beschichtungsauftrag, insbesondere zum Lackauftrag. In Fig. 5 kann beispielsweise in dem Beschichtungstunnel 2 eine Fahrzeugkarosserie 4 lackiert werden. Dem in Fig. 4 dargestellten Tunnelabschnitt können noch weitere Vorbehandlungsstationen vorgelagert sein, beispielsweise zur Reinigung, Entfettung, oder Oberflächenaufrauhung. Trocknung oder dergleichen.

Der Beschichtungstunnel 2 weist einen Verteilerkanal 3 auf, aus welchem mit Overspray beladene Luft in den Tunnel 2 und damit dem zu lackierenden Gegenstand zugeführt werden kann. Hierfür ist der Verteilerkanal 3 zum Tunnel 2 hin geöffnet. Dabei kann ein Deckensegment des Tunnels 2 als Filtersegment bei der Überführung der Luft vom Verteilerkanal 3 in die Kabine 2 ausgebildet sein.

Innerhalb der Kabine 2 ist eine Förderanlage 5 zum Transport des jeweils beschichteten Gegenstandes angeordnet. Dabei kann es sich z.B. um einen Kettenförderer oder um eine andere Art einer Förderanlage handeln. Im Inneren des Beschichtungstunnels 2 befinden sich Sprühapplikatoren 6, welche eine Beschichtung der Karosserie mit einem Beschichtungsmaterial ermöglichen. Nach unten hin ist das Tunnelsegment des Beschichtungstunnels 2 geöffnet. Die Begehbarkeit des Beschichtungstunnels 2 kann durch einen Gitterrost 7 ermöglicht werden. Unterhalb des Beschichtungstunnels 2 ist ein Abscheidebereich 8 angeordnet, in welchem die mit Overspray-Reste aus der Luft abgeschieden werden. Somit strömt Luft ausgehend vom Verteilerkanal 3 über den Beschichtungstunneln 2 bis in den Abscheidebereich 8, wobei sich die Luft im Beschichtungstunnel 2 mit Beschichtungsmaterial anreichert.

Der Abscheidebereich 8 weist ausgehend von dem Gitterrost 7 eine Leitstruktur 9 auf, welches das Beschichtungsmaterial in die Aufnahmeöffnung einer Abscheidevorrichtung 10 leitet. In der Abscheidevorrichtung erfolgt Filtration über mehrere Filterstufen 11 und 12 hinweg, in welchen Oversprayreste in den Filtermedien der Filterstufen verbleiben. Sodann wird die Luft über einen Kanal 13 abgeführt. Zumindest eine der Filterstufen 11 weist eine austauschbare Filtereinheit 14, 14' mit einem oder mehreren Filtermodulen 24-26 auf, welches in das örtlich-feststehende Gehäuse 15, den sogenannten Filteradapter 22, eingeführt und festgelegt wird. So kann die Filtereinheit 14 mit den daran abgeschiedenen Overspray-Resten beim Erreichen einer Höchstbelegung entfernt werden und gegen eine unverbrauchte Filtereinheit 16 mit einem oder mehreren Filtermodulen 24-26 ausgetauscht werden.

Fig. 1 zeigt die Einzelteile einer an einem Filteradapter 22 der erfindungsgemäßen Abscheidevorrichtung 21 der Beschichtungsanlage gekoppelte austauschbare Modulanordnung 23 aus mehreren miteinander verbundenen Filtermodulen 24-26.

Der Filteradapter 22 ist ein dauerhaft mit einer Leitstruktur 9, z.B. einem Luftleitkanal der Leitstruktur 9 verbundener Einschubkorpus 27. Der Einschubkorpus 27 weist eine Längsachse A auf und weist vorzugsweise zumindest zwei parallel zueinander ausgerichtete Seitenwände 28 und 29 auf. Besonders bevorzugt weist der Einschubkorpus eine Seiten-Rückwand 30 mit einer Luftauslassöffnung 20 auf.

Weiterhin weist der Einschubkorpus 27 des Filteradapters 22 eine Deckenwand 31 mit einer Durchtrittsöffnung 32 zur Überführung des Overspray-Luftstroms aus einem endständigen Leitstruktur-Anschlussbereich 33 des Filteradapters 22 in die Modulanordnung 23 auf. Dabei kann der Leitstruktur-Anschlussbereich 33 auf einen Stutzen, also einen rohrförmigen Ansatz der Leitstruktur aufgesteckt und mit diesem, insbesondere fest verbunden werden, wie dies u.a. in Fig. 4 dargestellt ist. Unterhalb vom rohrförmigen Leistruktur-Anschlussbereich 33 schließt sich ein Strömungsbeschleunigungsabschnitt 34 an, welcher entlang der Längsachse A konisch auf in Richtung der Durchtrittsöffnung 32 zuläuft und vorzugsweise mit der Deckenwand 31 des Einschubkorpus 27 endet.

Die Deckenwand 31 ist vorteilhaft senkrecht zur Längsachse A und vorzugsweise parallel zu einer Trennebene T ausgebildet, in welcher die Modulanordnung 23 dichtend an der Deckenwand 31 anliegt.

Randseitig weist der Einschubkorpus 27 in einem Anstand von weniger als 5 cm, vorzugsweise weniger als 1 cm unterhalb der Deckenwand 31 eine randseitige Führungsleiste 35 auf, auf welcher ein Verschlusselement als ein Trennblech 36 aufliegt.

Unterhalb der Trennebene T ist die Modulanordnung 23 angeordnet. Die Modulanordnung 23 umfasst mehrere Filtermodule 24-26 mit darin angeordneten nicht-näher dargestellten Filterelementen und/oder Filtermedien zur Erhöhung der Abscheideoberfläche und/oder zur Filtration von Partikeln unterschiedlicher Größen aus dem Luftstrom. Die treibende Kraft der Filtration durch ein Filtermedium ist der Druckunterschied zwischen den beiden Seiten des Filtermediums. Abscheideelemente oder Filtermedien sind an sich bekannt. Geeignete Filterelemente und Filtermedien für den Einsatz in Filtermodulen der Modulanordnung 23 werden beispielsweise in der WO2023051961 A oder der EP 4 267 313 A1 beschrieben. Sämtliche Filtermodule der Modulanordnung sind vorzugsweise Einweg-Filtermodule. Diese können beispielsweise zu mehr als 80 Gew.%. vorzugsweise vollständig, Papier und/oder Pappe und/oder Karton und/oder einem anderen Cellulosebasierten-Material gefertigt sein.

Es ist überdies auch möglich, dass das vorgenannte Material mit einer Innenbeschichtung oder einer Innenfolienauskleidung versehen ist, um die Gefahr eines Durchweichens der Gehäusewände der Filtermodule 24-26 durch die Abscheidungen zu verringern.

Das oberste Filtermodul 24 der Modulanordnung 23 weist eine Einströmöffnung 37 entlang Gehäuseaußenwandung 38 eines Gehäuses 18 auf. Im Gehäuse angeordnete Filterelemente sind aus Gründen der Vereinfachung nicht abgebildet. Es können z.B. säulenartige Halbschalen z.B. aus Pappe sein oder Lochblenden aus Pappe oder andere Wände, welche ein Labyrinth innerhalb des Filtermoduls ausbilden. Die vorgenannten Varianten sind lediglich Beispiele einer großen Auswahl unterschiedlicher Filterelemente. Die Gehäuseaußenwandung 38 weist entlang seiner Außenseite einen um die Einströmöffnung umlaufenden Dichtring 39 auf. Bevorzugt kann der Dichtring 39 als Flachdichtung, insbesondere mit rechteckigem Querschnitt, ausgebildet sein. Dabei die radiale Erstreckung des Dichtringquerschnitts vorteilhaft zumindest das Doppelte der axialen Erstreckung des Dichtringquerschnitts, mit Bezug auf die Längsachse A.

Der Dichtring 39 ist dabei um mindestens 1 cm gegenüber der Seitenwände 28 und/oder 29 beabstandet.

Die Breite des Dichtrings 39, die Anschlagsposition des Dichtrings 39 an der Deckenwand 31 und der Querschnitt der Einströmöffnung 37 kann variiert werden. Insbesondere kann der Querschnitt der Einströmöffnung 37 kleiner sein als der Querschnitt des Leitstruktur-Anschlussbereichs 33 und eines darin angeordneten Anschlussstutzens der Leitstruktur.

Im Unterschied zum Stand der Technik, wird durch den Dichtring durch Einstecken des Filtermoduls in den Einschubkorpus 27 und durch ein Anpressen des Filtermoduls 23 an die als Anschlagsfläche wirkende Deckenwand 31 durch den Dichtring 39 eine Dichtebene geschaffen. Die Dichtung erfolgt, wie in Fig. 3 und 4 dargestellt, durch Anschlag und nicht, wie im Stand der Technik durch eine Steckverbindung zweier korrespondierender Steckpartner. Dadurch kann bei der Fertigung der Filtermodule ein unterschiedlich großes Spiel zwischen dem Einschubkorpus, dem Filtermodul, der Umfangsgröße des Dichtrings als auch beim Querschnitt der Einströmöffnung gewählt werden, so dass die Fertigung der Filtermodule zudem günstiger und zeiteffizienter möglich ist.

Der Dichtring kann aus einem beliebigen brennbaren Material, vorzugsweise jedoch aus TPE oder einem Elastomer, gefertigt sein. Diese weisen eine gute elastomere Verformbarkeit auf.

Ebenfalls bevorzugt kann als Dichtring ein Dichtelement mit einem Hohlkammerprofil mit einer Hohlkammer im Profilquerschnitt eingesetzt werden. Dieses ist einerseits beim Anpressen an die deckenseitigen Anschlagsfläche besser verformbar, so dass ein großer Anlagebereich erreicht werden kann. Andererseits kann ein Hohlkammerprofil im Fall eines Anklebens besser durch das Trennblech ggf. sogar unter Materialzerstörung gelöst werden.

Wie zuvor beschrieben, umfasst der Filteradapter 22 den Einschubkorpus 27 und den Leitstruktur-Anschlussbereich 33, welche aus Metall, vorzugsweise Blech, gefertigt sind und welche vorzugsweise einstückig miteinander verbunden sind.

Randseitig am Einschubkorpus 27 weist der Filteradapter 22 eine Spannvorrichtung 40 auf. Die Spannvorrichtung 40 umfasst ein Verankerungselement, vorzugsweise eine Schiene 42 oder Öse, welches am Filteradapter 22 und/oder an der Filtereinheit 100 festgelegt ist. Dieses Verankerungselement bietet einem oder mehreren Spannelementen 41 der Spannvorrichtung 40 z.B. einem Gurt 43 einen Halt. Dies kann ggf. zusammen mit einem Endbeschlag, wie z.B. einem Haken, erfolgen. Die Schiene 42 ist in Fig. 1 als eine Reling, ausgebildet.

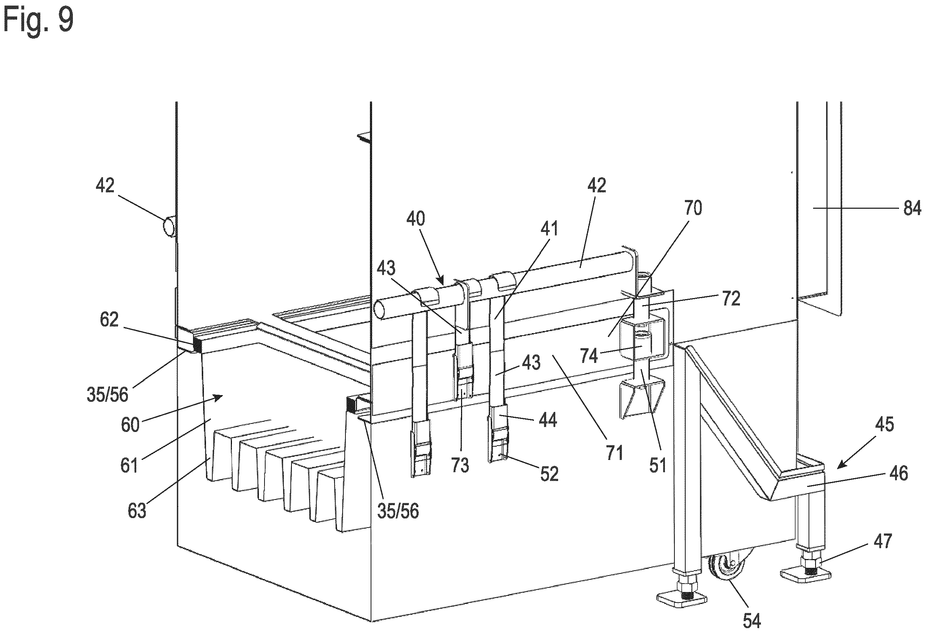

Fig. 9 zeigt weitere Details der Spannvorrichtung 40. Dabei sind die Gurte 43 mit Haken als Endbeschläge versehen, welche die Reling hintergreifen. Es ist ebenfalls möglich als Spannelemente 41 nur einen oder mehrere Gurtbänder vorzusehen, welche in beliebiger Art fest mit dem Einschubkorpus 27 verbunden sind und welche ggf. über ein weiteres Spannelement z.B. einen Gurtspanner 44, z.B. eine Ratsche oder dergleichen, spannbar sind.

Auch die Filtereinheit kann ein Verankerungselement für eines oder mehrere Spannelemente 41, z.B. Gurte, aufweisen. Es ist auch möglich, dass die Spannelemente direkt mit der Filtereinheit 100 verbunden, z.B. vernäht oder verklebt, sind.

Endständig weisen der Gurt oder die Gurte 43 eine Fixierung 52, vorzugsweise ein Fixierungsmittel, mit einem Filterrollkasten 50 auf, auf welchen die Modulanordnung 23 aufgesetzt ist. Der Filterrollkasten kann überdies eines oder mehrere Führungselemente 51, z.B. einen Führungszapfen oder eine Lagerbuchse aufweisen, zur Führung einer Hebebewegung des Filterrollkastens während des Verspannens mit dem Einschubkorpus.

Die Fixierung 52 kann als eine lösbare Rastverbindung des jeweiligen Gurts 43 mit dem Filterrollkasten 50 ausgebildet sein.

Es ist auch möglich, dass der Gurt 43 unlösbar am Filterrollkasten 50 angeordnet ist und dass der Gurt 43 eine lösbare Fixierung, insbesondere eine lösbare Rastverbindung, gegenüber dem Einschubkorpus 27 aufweist.

Es ist auch möglich, dass der Gurt 43 sowohl gegenüber dem Einschubkorpus 27 als auch gegenüber dem Filterrollkasten 50 lösbar fixiert, vorzugsweise jeweils durch eine Rastverbindung, ist.

Durch die Betätigung der Spannvorrichtung 40 kann ein Anheben des Filterrollkastens und der darauf angeordneten Modulanordnung 23 bis auf Anschlag und weitergehend ein Anpressen der Modulanordnung gegen die Deckenwand 31 erfolgen.

Um das Gewicht dauerhaft in Position zu halten, weist der Einschubkorpus 27 ein Stützgestell 45 auf. Dieses umfasst mehrere Gestängesegmente 46, welche über endständig mit höhenverstellbaren Stützfüßen 47 versehen sind und welche den Einschubkorpus 27 auf einem Untergrund abstützen.

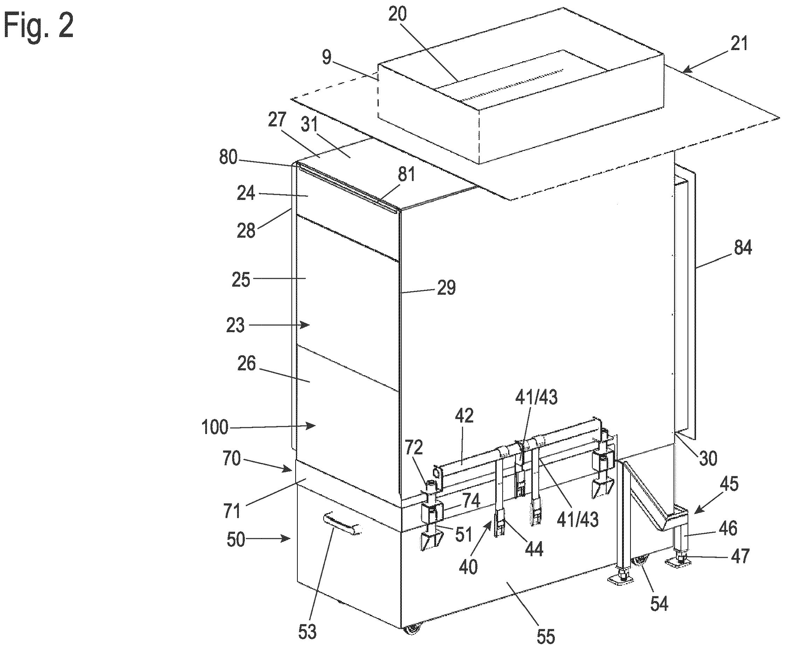

Das Stützgestell 45 und der Querschnitt des Einschubkorpus 27 durch die Längsachse A ist U-Förmig ausgebildet, so dass der Filterrollkasten 50 und/oder die Modulanordnung 23 bis auf Anschlag mit der Seiten-Rückwand 30 oder dem Stützgestell 45 in den Einschubkorpus 27 eingefahren werden kann, mit der Spannvorrichtung gekoppelt werden kann und anschließend durch Verspannen in eine Betriebsposition, wie in Fig. 2 dargestellt, angehoben werden kann.

Der Filterrollkasten 50 ist getrennt von der Modulanordnung 23 aus der Betriebsposition entnehmbar. Hierfür weist die Modulanordnung einen Zwischenboden 70 auf, an welcher analog zum Filterrollkasten 50 ebenfalls eine Fixierung 72 aufweist. Der Zwischenboden 70 muss nicht geschlossenwandig ausgebildet sein. In Fig. 9 ist er beispielsweise als ein Gestell aus verbundenen Flachrohren ausgebildet.

Außenseitig weist der Zwischenboden 70 eine umlaufende Auskragung 71, vorzugsweise aus Blech, aus. An dieser Auskragung 71 können vorteilhaft Verankerungselemente 73 und/oder Führungselemente 74, z.B. Führungszapfen und/oder Lagerbuchsen auf.

Durch den Zwischenboden kann die Modulanordnung 23 unabhängig von dem Filterrollkasten 50 an dem Einschubkorpus 27 festgelegt sein.

Der Filterrollkasten 50 weist überdies ein Griffelement 53 auf, womit der Filterrollkasten 50 bewegbar ist. Weiterhin weist der Filterrollkasten bodenseitige Rollen 54 zur Bewegung des Filterrollkastens 50 auf. Der Filterrollkasten 50 weist einen Gehäusekasten 55 auf und er weist überdies eines oder mehrere Stützelemente 56 zur Abstützung eines Wechselfiltermediums 60 innerhalb des Gehäusekastens 55 auf.

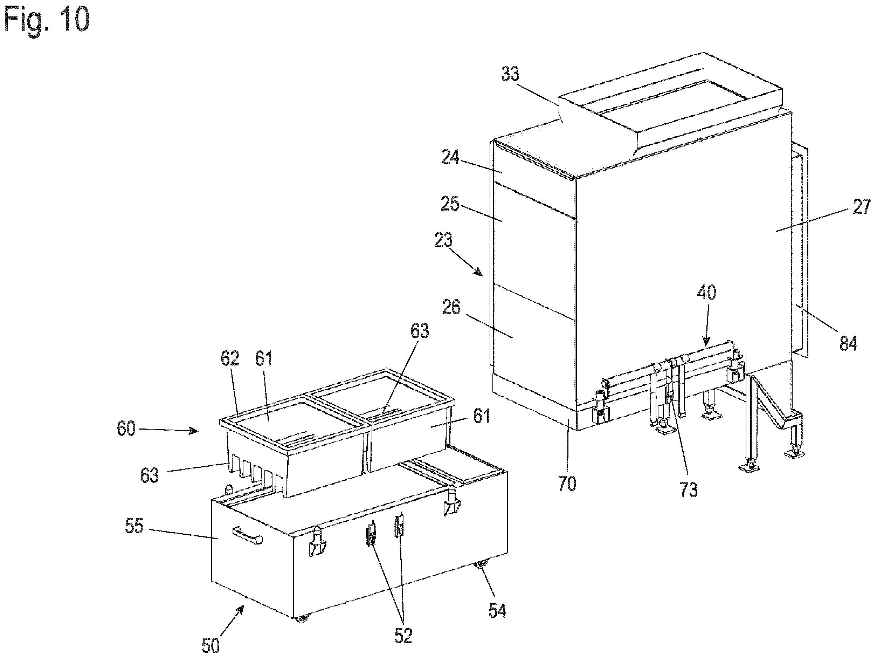

Das Wechselfiltermedium 60 ist z.B. in Fig. 10 dargestellt. Es umfasst einen wannenförmigen Grundkörper 61 mit einem Filterrahmen 62 mit Faltenfiltersegmenten 63, vorzugsweise mit starrem Faltenabstand. Bevorzugt ist der wannenförmige Grundkörper formstabil. Das Wechselfiltermedium 60 dient als sogenannter Feinabscheider. Er kann einen anderen Lebenszyklus aufweisen als die als Grobabscheider ausgebildeten Filtermodule 24-26 der Modulanordnung 23 und ist daher getrennt wechselbar. Dabei können die Grundkörper 61 dem Gehäusekasten 55 des Filterrollkastens 50, wie in Fig. 10 gezeigt, entnommen werden. Dabei liegt der Grundkörper 61 bevorzugt lose auf den Stützelementen 56 im Gehäusekasten 55 auf.

Es ist allerdings auch möglich in den Filterrollkasten 50 andere Taschenfilter oder ein Filtermedium in Form eines Filtervlieses, insbesondere als Faltenfilter, einzusetzen.

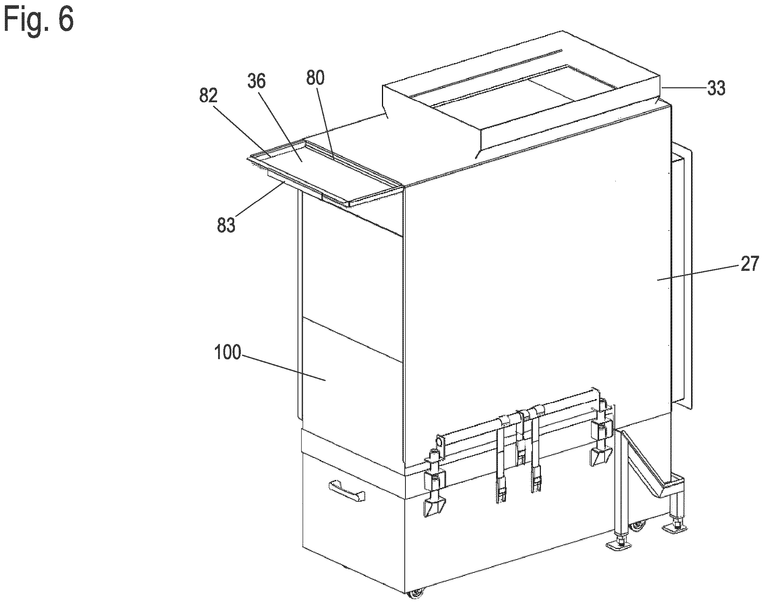

Weiterhin Teil der erfindungsgemäßen Abscheidevorrichtung ist Verschlusselement, vorzugsweise ein Trennblech 36, welches auf Höhe der Trennebene zwischen dem Filtermodul 24 und der Deckenwand 31 einschiebbar ist. Dies ist beispielsweise Fig. 5 im entnommenen Zustand dargestellt und in Fig. 6 im teilweise eingeschobenen Zustand dargestellt. Das Trennblech 36 wird dabei auf der Führungsleiste unterhalb der Deckenwand 31 positioniert und verschließt dadurch die Durchtrittsöffnung 32. Dadurch rieselt beim Austausch der Modulanordnung 23 keine Farbpartikel durch die geöffnete Durchtrittsöffnung 32.

Das Trennblech 36 weist eine randseitige oder mehrere vorzugsweise parallel-zueinander verlaufende randseitige Abkantungen 82 zur Versteifung des Trennblechs auf.

Weiterhin weist das Trennblech 36 einen stirnseitigen Griff 83 auf, zur Erleichterung der Bedienung des Trennblechs 36 für den Einschub und/oder die Entnahme in den Einschubkorpus.

Zusätzlich zu der Führung zwischen den Seitenwänden des Einschubkorpus 27 weist der Einschubkorpus in Fig. 5 und 6 ein Leiste 80 mit einen Führungsschlitz 81 auf, welche an einer Kante der Deckenwand 31 angeordnet ist. Der Führungsschlitz ermöglicht eine zusätzliche noch bessere Führung des Trennblechs bei dessen Positionierung innerhalb des Einschubkorpus.

Die Seitenwände 28, 29 des Einschubkorpus 27 sind derart dimensioniert, dass die Modulanordnung randseitig vollständig von den Seitenwänden 28 und 29 überdeckt wird.

Entlang der Seiten-Rückwand 30 ist die Luftauslassöffnung 20 mit einem Luftauslass-Rahmen 84 als Anschlussstutzen an eine Andockstation angeordnet. Dieser Luftauslass-Rahmen 84 ist in den Einschubkorpus 27 bzw. in die Luftauslassöffnung 20 eingesteckt, so dass die Position des Luftauslass-Rahmens 84 durch Variation der Einstecktiefe linear verschiebbar und damit einstellbar, insbesondere manuell einstellbar, ist.

Die Modularanordnung 23, der Zwischenboden 70 und der Filterrollkasten 50 bilden eine austauschbar Filtereinheit 100, deren Durchströmung bezogen auf das Erdgravitationsfeld von oben nach unten erfolgt. Dabei sind die jeweiligen Filtermodule, die darin befindlichen Filterelemente und das Wechselfiltermedium im Filterrollkasten derart aufeinander abgestimmt, dass von oben nach unten eine Abstufung von einer Grobfiltration zu einer Feinfiltration erfolgt.

Dies heißt, dass das oberste Filtermodul der Filtereinheit 100 Partikel mit einem größeren mittleren Partikelquerschnitt quantitativ abscheidet und Partikel mit einem kleineren mittleren Partikelquerschnitt nicht quantitativ entfernt, wohingegen das Wechselfiltermedium im Filterrollkasten ausgebildet ist zum Entfernen dieser Partikel mit kleinerem Partikelquerschnitt. Als abgeschiedene Partikel sind sowohl feste Partikel, flüssige Partikel z.B. als Nebentropfen oder pastöse Partikel zu verstehen.

Dabei kann jedes der Filtermodule 24-26 der Modulanordnung 23 ausgebildet sein zum quantitativen Abscheiden von Partikeln mit einem mittleren Partikeldurchmesserbereich, wobei der untere Grenzwert des besagten Partikeldurchmesserbereichs von oben nach unten für jedes Filtermodul kleiner wird als für das vorangegangene Filtermodul.

Der Filterrollwagen 50 und die Modulanordnung 23 können unabhängig voneinander ausgewechselt werden.

Ein Verfahren zum Austausch der Filtereinheit in der vorbeschriebenen Abscheidevorrichtung der Beschichtungsanlage umfasst die folgenden Schritte:
A Entnahme zumindest eines verbrauchten Teilelements einer verbrauchten Filtereinheit oder der gesamten gebrauchten Filtereinheit aus dem Einschubkorpus des Filteradapters;
B Einschub einer unverbrauchten Filtereinheit und/oder eines Teilelements der Filtereinheit zwischen die Seitenwände des Einschubkorpus;
C Verbinden von Spannelementen der Filtereinheit zu einer Spannvorrichtung;
D Verspannen der Spannvorrichtung unter Anheben der Filtereinheit und/oder des Teilelements bis zu einem Anschlag.

Das Verfahren kann insbesondere in Schritt A einen Verschluss der Durchtrittsöffnung in der Deckenwand durch Einführen eines Trennblechs entlang einer Trennebene zwischen der austauschbaren Filtereinheit und dem fest-installierten Filteradapter.

Weiter kann das Verfahren einen unabhängigen Austausch einzelner Teilelemente der Filtereinheit, respektive der Modulanordnung 23 und dem Filterrollwagen 50 umfassen.

Schließlich wird eine Verbindung zwischen der Filtereinheit und dem Filteradapter durch Anschlag eines Filtermoduls der Filtereinheit, respektive des flach auf der Seitenwand des Filtermoduls aufsitzenden Dichtrings des Filtermoduls gegen die Deckenwand mit der Durchtrittsöffnung erzeugt.

Insgesamt lässt sich der Austausch unkompliziert mit wenigen Handgriffen bewerkstelligen. Dabei kommt es zu keiner oder nur geringen Kontamination der Umwelt durch austretende Overspray-Partikel.

Als Partikel im Zusammenhang mit der vorliegenden Erfindung werden sowohl Feststoffpartikel als auch Flüssigkeitströpfchen bezeichnet, welche im Luftstrom enthalten sind.

### Bezugszeichen

- 1: Beschichtungsanlage
- 2: Beschichtungstunnel
- 3: Verteilerkanal
- 4: Fahrzeugkarosserie
- 5: Förderanlage
- 6: Sprühapplikatoren
- 7: Gitterrost
- 8: Abscheidebereich
- 9: Leitstruktur
- 10: Abscheidevorrichtung
- 11: Filterstufe
- 12: Filterstufe
- 13: Kanal
- 14: Filtermodul
- 15: Gehäuse
- 16: Filtereinheit
- 18: Gehäuse (Filtereinheit)

- 20: Luftauslassöffnung
- 21: Abscheidevorrichtung
- 22: Filteradapter
- 23: Modulanordnung
- 24: Filtermodul
- 25: Filtermodul
- 26: Filtermodul
- 27: Einschubkorpus
- 28: Seitenwand
- 29: Seitenwand
- 30: Seiten-Rückwand
- 31: Deckenwand
- 32: Durchtrittsöffnung
- 33: Leitstruktur-Anschlussbereich
- 34: Strömungsbeschleunigungsabschnitt
- 35: Führungsleiste
- 36: Trennblech
- 37: Einströmöffnung
- 38: Gehäuseaußenwand
- 39: Dichtring
- 40: Spannvorrichtung
- 41: Spannelement
- 42: Schiene
- 43: Gurt
- 44: Gurtspanner
- 45: Stützgestell
- 46: Gestängesegmente
- 47: Stützfüße

- 50: Filterrollkasten
- 51: Führungselemente
- 52: Fixierung
- 53: Griffelement
- 54: Rollen
- 55: Gehäusekasten
- 56: Stützelement

- 60: Wechselfiltermedium
- 61: Grundkörper
- 62: Filterrahmen
- 63: Faltenfiltersegmente

- 70: Zwischenboden
- 71: Auskragung
- 72: Fixierung
- 73: Verankerungselement
- 74: Führungselement

- 80: Leiste
- 81: Führungsschlitz
- 82: Abkantungen
- 83: Griff
- 84: Luftauslass-Rahmen

- 100: Filtereinheit

- T: Trennebene
- A: Längsachse

## Patentansprüche

1. Abscheidevorrichtung (10) zum Abscheiden von flüssigen oder festen Partikeln aus einem mit Overspray beladenen Luftstrom einer Beschichtungsanlage (1), umfassend einen Filteradapter (22) zur dauerhaften Festlegung an einem Stutzen einer Leitstruktur (9) einer Beschichtungsanlage (1) zur Ableitung von Overspray aus einer Lackierkabine, wobei der Filteradapter (22) einen Leitstruktur-Anschlussbereich (33) zum Anschluss an den Stutzen und einen Einschubkorpus (27) zur Aufnahme einer austauschbaren Filtereinheit (14, 16, 100) aufweist, wobei der Leitstruktur-Anschlussbereich (33) vom Einschubkorpus (27) durch eine Deckenwand (31) getrennt ist und wobei die Deckenwand (31) eine Durchtrittsöffnung (32) zur Überleitung von Overspray aus dem Leitstruktur-Anschlussbereich (33) in den Bereich des Einschubkorpus (27) aufweist, **dadurch gekennzeichnet, dass** die Filtereinheit (14, 16, 100) auf einer zur Deckenwand (33) gerichteten Gehäuseaußenwand (38) einen Dichtring (39) aufweist, welcher derart dimensioniert ist, dass der Dichtringumfang größer ist als der Umfang der Durchtrittsöffnung (32).

2. Abscheidevorrichtung nach Anspruch 1, **dadurch gekennzeichnet, dass** der Einschubkorpus (27) mit der Filtereinheit (14, 16, 100) über eine Spannvorrichtung (40) verspannt ist, derart, dass die Filtereinheit (14, 16, 100) gegen die Deckenwand (33) gepresst ist.

3. Abscheidevorrichtung nach Anspruch 1 oder 2, **dadurch gekennzeichnet, dass** die Filtereinheit (14, 16, 100) mehrere Filtermodule (24-26) umfasst, wobei ein Element (24-26, 70) der Filtereinheit (16, 100) Spannelemente (41) als Teil der Spannvorrichtung (40) aufweist.

4. Abscheidevorrichtung nach einem der vorhergehenden Ansprüche, **dadurch gekennzeichnet, dass** die Spannvorrichtung (40) am Einschubkorpus (37), insbesondere an zwei parallel-zueinander angeordneten Seitenwänden (38, 39), festgelegt ist

5. Abscheidevorrichtung nach einem der vorhergehenden Ansprüche, **dadurch gekennzeichnet, dass** die Filtereinheit (14, 16, 100) einen rollengelagerten Filterrollkasten (50) aufweist, in welchem vorzugsweise ein austauschbares Wechselfiltermedium (60) angeordnet ist.

6. Abscheidevorrichtung nach einem der vorhergehenden Ansprüche, **dadurch gekennzeichnet, dass** die Filtereinheit (14, 16, 100) eine Modulanordnung (23) mit mehreren, insbesondere übereinander angeordneten Filtermodulen (24-26), vorzugsweise Einweg-Filtermodulen, aufweist, wobei der Filterrollkasten (50) und die Modulanordnung (23) getrennt voneinander verspannt an dem Filteradapter (22), insbesondere an dem Einschubkorpus (27), festgelegt, insbesondere verspannt, ist.

7. Abscheidevorrichtung nach einem der vorhergehenden Ansprüche, **dadurch gekennzeichnet, dass** die Filtereinheit (14, 16, 100) einen Zwischenboden (70) zwischen der Modulanordnung (23) und dem Filterrollkasten (50) aufweist, wobei der Zwischenboden (70) Spannelemente (41) als Teil der Spannvorrichtung (40) aufweist.

8. Filtereinheit (14, 16, 100) einer Abscheidevorrichtung (10) zum Abscheiden von flüssigen oder festen Partikeln aus einem mit Overspray beladenen Luftstrom einer Beschichtungsanlage (1), vorzugsweise einer Abscheidevorrichtung (10) nach einem der vorhergehenden Ansprüche, wobei die Filtereinheit (14, 16, 100) zumindest ein Filtermodul (24-26) aufweist, welches als Einweg-Filtermodul ausgebildet ist und wobei die wobei das Filtereinheit (14, 16, 100) an einer Gehäuseaußenwand (38) eine Einströmöffnung (37) aufweist,
**dadurch gekennzeichnet, dass**
die Filtereinheit (14, 16, 100) an der Außenseite der Gehäuseaußenwand (38) einen Dichtring (39) aufweist, der um die Einströmöffnung (37) herum angeordnet ist, wobei der Dichtring (39) als eine Hohlkammerdichtung mit einer Hohlkammer innerhalb Profilquerschnitts durch die Längsachse des Dichtrings (39) ausgebildet ist.

9. Filtereinheit nach Anspruch 8, **dadurch gekennzeichnet, dass** der Dichtring (39) an der Gehäuseaußenwandung (38) eines Gehäuses (18) des Filtermoduls (24) anliegt.

10. Filtereinheit nach einem der vorhergehenden Ansprüche 8 oder 9, **dadurch gekennzeichnet, dass** der Dichtring (39) im Profilquerschnitt durch die Längsachse des Dichtrings (39) im unbelasteten Zustand eine größere Erstreckung, vorzugsweise eine um mehr als 50% größere Erstreckung, in einer Richtung parallel zur Gehäuseaußenwand (38) aufweist als senkrecht zur Gehäuseaußenwand (38).

11. Filtereinheit nach einem der vorhergehenden Ansprüche, **dadurch gekennzeichnet, dass** der Dichtring (39) aus einem Elastomer und/oder einem TPE gebildet ist.

12. Filtereinheit nach einem der vorhergehenden Ansprüche, **dadurch gekennzeichnet, dass** das Filtermodul (24) zu mehr als 90 Gew.% aus einem zellulosehaltigen Material gebildet ist wobei besonders bevorzugt das Filtermodul (24), abgesehen vom Dichtring (39), aus Pappe besteht.

13. Verwendung einer Filtereinheit (14, 16, 100) nach einem der vorhergehenden Ansprüche in einer Beschichtungsanlage (1) mit einer Abscheidevorrichtung (10) zum Abscheiden von flüssigen oder festen Partikeln aus einem mit Overspray beladenen Luftstrom.

14. Verfahren zum Austausch von Filterelementen (14, 16, 100) in einer Abscheidevorrichtung (10) einer Beschichtungsanlage (1) nach einer der vorhergehenden Ansprüche, **gekennzeichnet durch die folgenden Schritte:**
A Entnahme zumindest eines verbrauchten Teilelements (23, 50) einer verbrauchten Filtereinheit (14, 16, 100) oder der gesamten gebrauchten Filtereinheit (14, 16, 100) aus dem Einschubkorpus (27) des Filteradapters (22);
B Einschub einer unverbrauchten Filtereinheit (14, 16, 100) und/oder eines Teilelements der Filtereinheit (14, 16, 100) zwischen die Seitenwände (28, 29) des Einschubkorpus (27);
C Verbinden von Spannelementen (41) der Filtereinheit (14, 16, 100) und des Filteradapters (22) zu einer Spannvorrichtung (40); und
D Verspannen der Spannvorrichtung (40) unter Anheben der Filtereinheit (14, 16, 100) und/oder des Teilelements (23, 50) bis zu einem Anschlag.

15. Verfahren nach Anspruch 16, **dadurch gekennzeichnet, dass** in Schritt A ein Verschluss einer Durchtrittsöffnung (32) in einer Deckenwand (31) des Einschubkorpus (27) durch Einführen eines Verschlusselements, vorzugsweise eines plattenförmigen Verschlusselements, besonders bevorzugt eines Trennblechs (36), entlang einer Trennebene (T) zwischen der austauschbaren Filtereinheit (14, 16, 100) und dem fest-installierten Filteradapter (22) erfolgt.
